# EUROPEAN PATENT SPECIFICATION

(11) **EP 4 060 208 B1**
(45) Date of publication and mention of the grant of the patent: **22.11.2023**
(21) Application number: 22162626.0
(22) Date of filing: 17.03.2022
(51) Int. Cl.: F16H 57/04

(54) **TRANSMISSION MECHANISM AND ELECTRIC DRILL**
GETRIEBEMECHANISMUS UND ELEKTRISCHER BOHRER
MÉCANISME DE TRANSMISSION ET FORET ÉLECTRIQUE

(30) Priority: 17.03.2021 CN 202120550006 U
(43) Date of publication of application: 21.09.2022
(73) Proprietor: Globe (Jiangsu) Co., Ltd., Changzhou, Jiangsu 213023 (CN)
(72) Inventor: HUANG, Fei, Jiangsu, 213023 (CN)
(74) Representative: Bergenstråhle & Partners AB

(56) References cited:
- CN-U- 212 337 191
- US-A1- 2020 271 210

## Description

### TECHNICAL FIELD

The disclosure relates to the technical field of power tools, in particular to a transmission mechanism and an electric drill.

### BACKGROUND

Electric drills are widely used in sloping, sandy, and hard soil for seedling landscaping projects to plant and dig pits, and excavate the periphery of large trees. However, in the conventional electric drill transmission structure, in a matching part between the planetary gear and the output shaft pin, the shaft-hole fit method is often used, and the clearance is properly reserved to achieve a purpose of a clearance fit. In order to improve the lubrication state of the shaft hole, it is only possible to appropriately increase the fit clearance, but this will affect the positioning accuracy of the planetary gear. And since the secondary planetary gear will bear a large load, eventually a large pressure will be generated between the planetary gear hole and the output shaft pin. In a presence of oil film, it can work normally under a large load. If after a period of use, due to the large pressure and small clearance fit, the oil film between the pin and the gear hole is damaged and not replenished in time, which will cause a metal dry grinding under an action of the large load to further deteriorate the oil film, and eventually a failure of the gear hole and the output shaft pin due to a gluing by the deteriorated oil.

US 2020/271210 discloses a planet gear support shaft including a cylindrical body that is open at both ends in a central axis direction. The cylindrical body has an inlet port through which lubricating oil is introduced into a hollow portion of the cylindrical body, and a discharge port through which the lubricating oil introduced into the hollow portion is discharged, the inlet port and the discharge port are open to an inner peripheral surface of the hollow portion at different positions in the central axis direction. An oil guide groove is provided between a first opening of the inlet port and a second opening of the discharge port in the inner peripheral surface. The oil guide groove is configured to guide the lubricating oil between the first opening and the second opening.

CN 212337191U discloses a drill rod assembly and a ground auger, the drill rod assembly comprises a drill rod, and the drill rod comprises a drill shaft and a spiral drill blade installed on the drill shaft; a shaft hole matched with the drilling shaft is formed in the center of the splitter plate, and the splitter plate is fixedly mounted on the drilling shaft through the shaft hole; the splitter plate abuts against the lower end of the spiral drill blade on the drill shaft. The splitter plate comprises a base plate and a drainage unit arranged on the base plate. The drainage unit comprises a drainage opening formed in the base plate, a drainage plate arranged on one side of the drainage opening and located above the base plate, and a blade arranged on the other side of the drainage opening and located below the base plate.

### SUMMARY

The invention provides a transmission mechanism and an electric drill. The transmission mechanism is driven by a gear set, and a helical groove is arranged on an inner wall of a shaft hole of a gear to store lubricant.

The invention provides a transmission mechanism according to claim 1. Further embodiments of the invention are defined in the dependent claims.

The invention further provides an electric drill according to claim 12.

The invention provides the transmission mechanism and the electric drill. Through machining the helical groove in the inner hole of the gear in a planetary transmission, a storage of lubricant may be achieved, so as to increase a duration life of a transmission structure, especially in a heavy-duty transmission structure, which improves the lubrication condition.

### BRIEF DESCRIPTION OF THE DRAWINGS

In order to explain technical solutions of embodiments of the invention more clearly, the following will briefly introduce drawings used in the description of the embodiments or prior art. Obviously, the drawings in the following description are only some embodiments of the invention. For those of ordinary skill in the art, other drawings may be obtained based on these drawings without creative work.
FIG. 1 is a schematic structural view of an overall structure of an electric drill according to an embodiment of the the invention.
FIG. 2 is a schematic structural view of a supporting assembly.
FIG. 3 is a schematic structural view of part of the structure of the electric drill.
FIG. 4 is a schematic cross-sectional structure view of FIG. 3.
FIG. 5 is a schematic cross-sectional structure view of a driving assembly.
FIG. 6 is an exploded schematic structural view of the driving assembly.
FIG. 7 is a schematic structural view of a gear.

### PART NUMBER DESCRIPTION

10-supporting assembly, 11-supporting plate, 12-bracket, 111-through hole, 112-moment bearing component, 121-main arm, 122-handle, 1221-handle grip, 20-handle assembly, 30-drill rod assembly, 40-driving assembly, 41-driving motor, 411-heat dissipation blade, 42-housing, 421-accomondating cavity, 422-battery groove, 423-partition, 43-air guiding cover, 44-gearbox, 45-output shaft, 451-counterbore, 452-positioning pin, 46-connecting base, 47-bearing, 471-first bearing, 472-second bearing, 48-bearing base, 4212-air outlet cavity, 431-arc guiding wall, 31 -drill rod, 32- splitter plate, 311-drill shaft, 312-double auger blade, 491-first planetary gear, 492-inner ring gear, 493-first sun gear, 494-first planet carrier, 495-first gear shaft, 496-second planetary gear, 497-second sun gear, 498-second planet carrier, 499-second gear shaft, 401-helical groove.

### DETAILED DESCRIPTION

The following describes the implementation of the invention through specific embodiments, and those skilled in the art can easily understand other advantages and effects of the invention from the content disclosed in this specification. The invention can also be implemented or applied through other different specific embodiments, and various details in this specification can also be modified or changed based on different viewpoints and applications without departing from the scope of the appended claims.

It should be noted that the figures provided in this embodiment only illustrate the basic idea of the invention in a schematic manner. The figures only show the components related to the disclosure instead of drawing according to the number, shape and size of the components during actual implementation. The type, number and proportion of each component during actual implementation can be changed at will, and the layout of its components may also be more complicated.

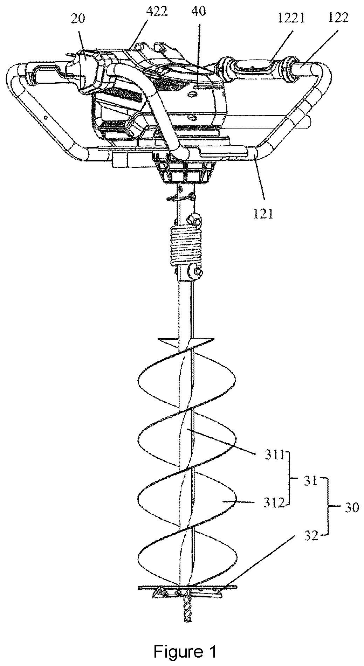

In order to solve problems of poor positioning accuracy and low duration life of the planetary gear, the disclosure provides a transmission assembly for an electric drill. Please refer to FIG. 1. The electric drill includes a supporting assembly 10, a handle assembly 20, a drill rod assembly 30 and a driving assembly 40. The driving assembly 40 includes a driving motor 41 and the transmission assembly mentioned above. The transmission assembly includes a gear assembly. The gear assembly includes a gear and a gear shaft. The gear is provided with a shaft hole. The gear shaft is mounted in the shaft hole. An inner wall of the shaft hole is provided with a helical groove to store lubricant.

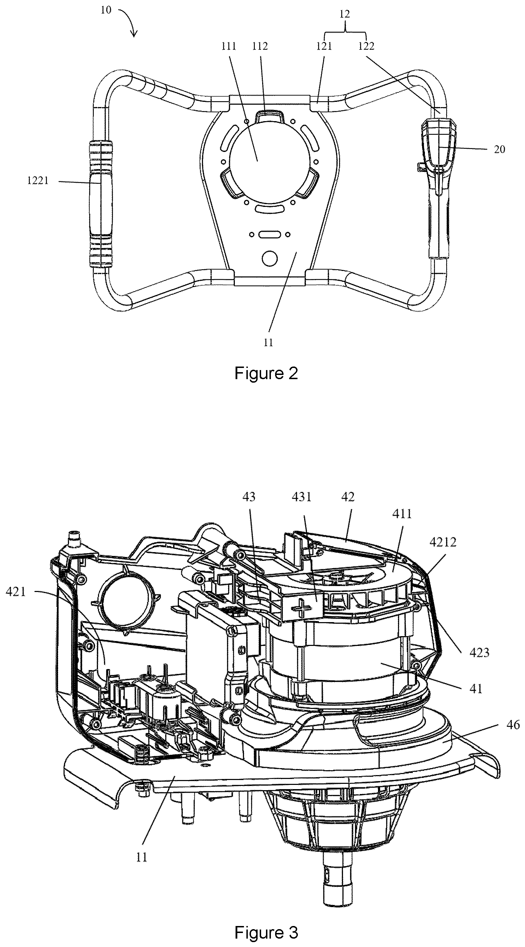

Please refer to FIG. 1 and FIG. 2. In an unclaimed embodiment of the invention the supporting assembly 10 includes a supporting plate 11 and a bracket 12. The supporting plate 11 is fixedly mounted on the bracket 12. The supporting plate 11 is provided with a through hole 111 matched with the driving assembly 40 and a moment bearing component 112. The moment bearing components 112 are evenly distributed and arranged along a periphery of the through hole 111 to bear a moment transmitted by the driving assembly 40 to the supporting plate 11. A quantity of the moment bearing components 112 may be set as required. When the number of the moment bearing components 112 is multiple, the moment bearing components 112 are evenly distributed and arranged on the periphery of the through hole 111, so that each of the moment bearing components 112 may bear substantially equal moments, thereby effectively preventing some moment bearing components 112 from being easily damaged due to an uneven bearing of the moment. The bracket 12 includes a main arm 121 and a handle 122. The handle 122 is defined through bending and extending from both sides of the main arm 121. The handle assembly 20 is mounted on the handle 122. The supporting plate 11 is fixedly mounted on the main arm 121 by screws. In an embodiment, a handle grip1221 is arranged on the handle 122 to improve a user's feeling.

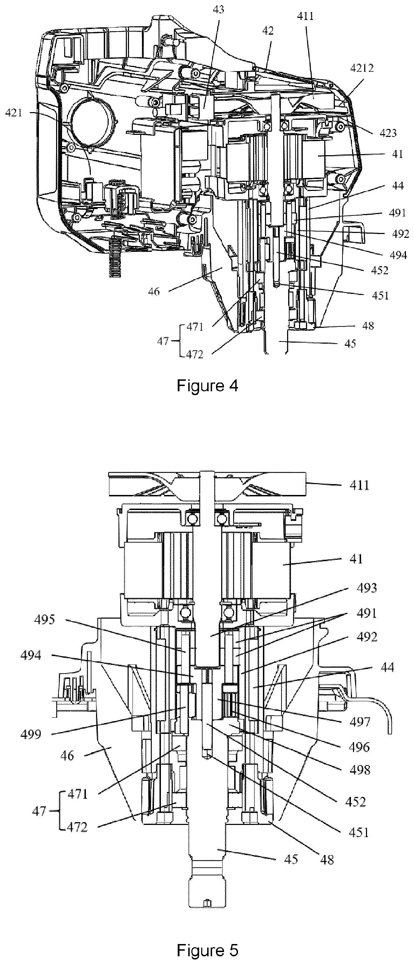

Please refer to FIG. 3 and FIG. 4. In an embodiment of the invention, the drill rod assembly 30 is mounted on the driving assembly 40. The drill rod assembly 30 is driven to work by the driving assembly 40, and the driving assembly 40 is fixedly mounted on the supporting plate 11. The driving assembly 40 includes a driving motor 41, a housing 42, an air guiding cover 43, a gearbox 44, an output shaft 45, a connecting base 46, a bearing 47, a bearing base 48 and a transmission mechanism. The housing 42 is fixedly mounted on the supporting plate 11 by screws, and matched with the connecting base 46 to define an accommodating cavity 421. The accommodating cavity 421 is configured to accommodate the driving motor 41, the air guiding cover 43 and the gearbox 44. The housing 42 is provided with a battery groove 422 and a partition 423. The battery groove 422 is configured to accommodate a battery assembly, and the battery groove 422 is located on a side of the driving motor 41 close to the user to supply power for the electric drill. The partition 423 abuts against a motor casing of the driving motor 41 and is matched with the air guiding cover 43 in order to divide the accommodating cavity 421 into an air inlet cavity and an air outlet cavity 4212. An end of the driving motor 41 is provided with a heat dissipation blade 411 away from the connection base 46. The heat dissipation blades 411 is housed in the air outlet cavity 4212. A rest of the driving motor 41 except the heat dissipation blade 411 and the gearbox 44 are housed in the air inlet cavity. In the embodiment, an arc guiding wall 431 is arranged on a side of the air guiding cover 43 facing the driving motor 41 to smoothly guide hot air to be discharged from the heat dissipation blades 411 to an outside of the air outlet cavity 4212, and reduce an air resistance of the hot air in the air outlet cavity 4212. One end of the gearbox 44 is matched with the driving motor 41, and the other end of the gearbox 44 is matched with the output shaft 45 of the transmission mechanism, so as to transmit a power output by the driving motor 41 to the output shaft 45 of the transmission mechanism. Please refer to FIG .1. In an unclaimed embodiment, the drill rod assembly 30 includes a drill rod 31 and a splitter plate 32. The drill rod 31 includes a drill shaft 311 mounted on the driving assembly 40 and a double auger blade mounted on the drill shaft 311. In the embodiment, the bearing 47 is sleeved on the output shaft 45 and includes a first bearing 471 located in the gearbox 44 and a second bearing 472 located in the bearing base 48. The output shaft 45 passes through the first bearing 471, the second bearing 472 and the bearing base 48, and protrudes out of the bearing base 48 to be matched with the drill rod assembly 30. Since the first bearing 471 is arranged in the gearbox 44 and the second bearing 472 is arranged in the bearing base 48, a distance between the first bearing 471 and the second bearing 472 may be maximized, thereby effectively ensuring an output coaxially of the output shaft 45.

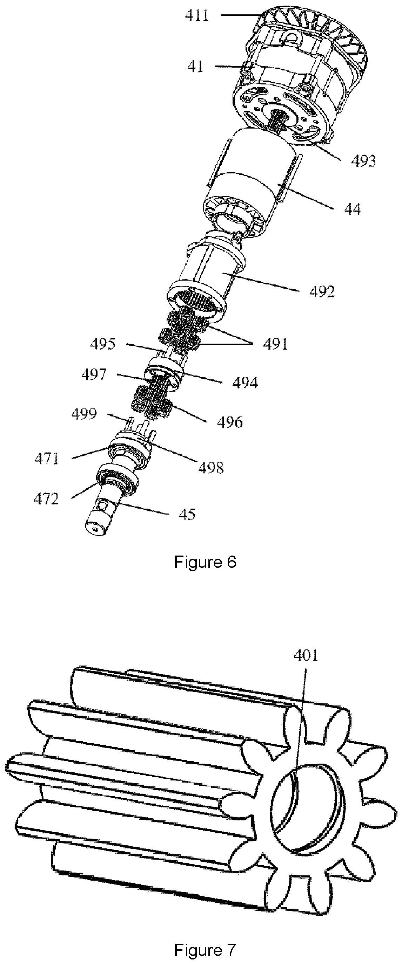

Please refer to FIG. 4 through FIG. 6. The invention provides the transmission mechanism, the transmission mechanism is used for the electric drill. In an embodiment of the invention, the transmission mechanism includes a first sun gear, a first planetary assembly and an output shaft. The first sun gear is arranged on the motor output shaft of the driving motor. The first planetary gear assembly includes a first planet carrier and a first planetary gear. The first planetary gear is arranged on one side of the first planet carrier and meshes with the first sun gear. An inner wall of the shaft hole of the gear in the first planetary gear is provided with a helical groove to store lubricant. One end of the output shaft is fixedly connected with a side of the first planetary gear away from the first planet carrier. The other end of the output shaft is fixedly connected with the drill rod assembly 30 to drive the drill rod assembly 30.

Please refer to FIG. 4 through FIG. 6. In another embodiment, the transmission mechanism includes the first sun gear, the first planetary gear assembly, a second sun gear, a second planetary gear assembly and an inner ring gear. The first planetary gear assembly includes a first planetary gear 491 and a first planet carrier 494. A plurality of first gear shafts 495 are arranged on a side of the first planet carrier 494, and the plurality of the first gear shafts 495 are evenly arranged along a periphery of the first planet carrier 494. The first planetary gear 491 is sleeved on the first gear shaft 495. The first sun gear 493 and the first planetary gear 491 are located in the inner ring gear 492, and the first planetary gear 491 meshes with the inner ring gear 492 and the first sun gear 493. In the embodiment, the first planetary gear 491 includes at least two sets. The at least two sets of the first planetary gears 491 are arranged and overlapped in an axial direction of the inner ring gear 492, which means that the at least two sets are both arranged on the first gear shaft 495. Each set of the first planetary gears 491 includes a plurality of gears, and the plurality of gears are evenly distributed and arranged around the first sun gear 493 and are located on the same level. In some embodiments, the number of gears in each set of the first planetary gears 491 is four. In the embodiment, the first planetary gear 491 is located between the first sun gear 493 and the inner ring gear 492, and meshes with the first sun gear 493 and the inner ring gear 492 for transmission, so that a load borne by the first planetary wheel 491 is relatively uniform, and the first planet carrier 494 can bear a relatively large load and provide a stable output. In the embodiment, the first sun gear 493 is fixedly connected with the motor output shaft of the driving motor 41, or the first sun gear 493 and the motor output shaft of the driving motor 41 are integrally formed. In the embodiment, a helical groove 401 is arranged on an inner wall of the shaft hole of the first planetary gear 491 to store lubricant, so as to increase a duration life of the transmission structure, and to avoid affecting a positioning accuracy of the planetary gear due to an increase of the fit clearance.

Please refer to FIG. 4 through FIG. 7. In this unclaimed the- embodiment, the second planetary gear assembly is located below the first planetary gear assembly, and the second planetary gear assembly and the first planetary gear assembly are on the same axis, so as to improve an accuracy of transmission. The second planetary gear assembly includes a second planetary gear 496 and a second planet carrier 498. The second sun gear 497 is fixed on a bottom of the first planet carrier 498, which means that the second sun gear 497 is fixedly connected with a side of the first planet carrier 498 away from the first gear shaft 495. The second planetary gear 496 is arranged on a side of the second planet carrier 498. In an unclaimed embodiment, a plurality of second gear shafts 499 are arranged on one side of the second planet carrier 498. The plurality of the second gear shafts 499 are evenly arranged on the second planet carrier 498 in a circumferential direction, and the output shaft 45 is fixedly connected with a side of the second planet carrier 498 away from the second gear shaft 499. The output shaft 45 is used to connect with the drill rod assembly 30. The output shaft 45 is fixedly connected or integrally formed with the second planet carrier 498. In this embodiment, the number of gears in the second planetary gear 496 is five. The gears are evenly arranged around the second sun gear 497 and on the same level as the second sun gear. And the gears mesh with the inner ring gear 492 and the second sun gear 497 for transmission, so that a load on the second planetary gear 496 is relatively uniform, and the second planet carrier 498 can bear a relatively large load and form a stable output. In this embodiment, a counterbore 451 is arranged on an end of the output shaft 45 connected with the second planet carrier 498. The counterbore 451 is located on the same axis as central holes of the first planet carrier 494 and the second planet carrier 498. Diameters of the central holes of the first planet carrier 494 and the second planet carrier 498 are the same as a diameter of the counterbore 451. The counterbore 451 is provided with a positioning pin 452. An end of the positioning pin 452 protrudes out of the counterbore 452 and extends into the central holes of the first planet carrier 494 and the second planet carrier 498 to ensure that the first planet carrier 494, the second planet carrier 498 and the output shaft 45 rotate coaxially. In this embodiment, the second planet carrier 498 and the output shaft 45 may be integrally formed, so as to further ensure the accuracy in the transmission process. In this embodiment, a helical groove 401 is arranged on an inner wall of the shaft hole of the second planetary gear 496 to store lubricant, so as to increase a duration life of the transmission structure, and to avoid affecting a positioning accuracy of the planetary gear due to an increase of the fit clearance.

The invention provides the transmission mechanism and the electric drill. A plurality of gears are arranged in the transmission mechanism. Through processing a helical groove in an inner hole of the gears, lubricant may be stored therein so as to increase the duration life of the transmission mechanism. In a heavy-duty transmission structure, this structure improves a lubrication condition. It is also avoided increasing the fit clearance due to a need for lubrication, which will affect the positioning accuracy of the planetary gear, so that the positioning accuracy of the planetary gear is higher.

The above description is only an embodiment of the invention and an explanation of the applied technical principles, and those skilled in the art should understand that the scope of the invention is defined by the claims.

Besides the technical features described in the specification, the remaining technical features are known to those skilled in the art which will not be repeated here.

## Claims

1. A transmission mechanism, comprising:
a first sun gear (493), arranged on a motor output shaft of a driving motor (41),
a first planetary gear assembly, comprising a first planet carrier (494) and a first planetary gear (491), the first planetary gear (491) being arranged on a side of the first planet carrier (494) and meshing with the first sun gear (493), a shaft hole being arranged on a gear in the first planetary gear (491), a first gear shaft (495) being mounted in the shaft hole, an end of the first gear shaft (495) being connected with the first planet carrier (494), and an output shaft (45), connected with a side of the first planetary gear (491) away from the first planet carrier (494) **characterized in that** an inner wall of the shaft hole being provided with a helical groove (401) configured to store lubricant.

2. The transmission mechanism according to claim 1, further comprising an inner ring gear (492), wherein
the first planetary gear (491) is located in the inner ring gear (492) and meshes with the inner ring gear (492).

3. The transmission mechanism according to claim 2, further comprising a gearbox (44), wherein
the first planetary gear assembly and the inner ring gear (492) are located in the gearbox (44), and the inner ring gear (492) is connected with an inner wall of the gearbox (44).

4. The transmission mechanism according to any one of preceding claims, wherein
one end of the output shaft (45) is fixedly connected with a bottom of the first planet carrier (494), and the other end of the output shaft (45) is connected with a drill rod assembly (30).

5. The transmission mechanism according to claim 4, wherein
the end of the output shaft (45) connected with the first planet carrier (494) is provided with a counterbore (451), and the counterbore (451) and a center hole of the first planet carrier (494) are on a same axis.

6. The transmission mechanism according to claim 5, wherein
a positioning pin (452) is arranged in the counterbore (451), and an end of the positioning pin (452) protrudes out of the counterbore (451) and extends into the center hole of the first planet carrier (494) to ensure a coaxial rotation of the first planet carrier (494) and the output shaft.

7. The transmission mechanism according to claim 2, further comprising a second sun gear, and a second planetary gear assembly.

8. The transmission mechanism according to claim 7, wherein
the first sun gear (493) is arranged on the motor output shaft, the first planetary gear assembly is meshed with the first sun gear (493) through a first planetary gear (491), a bottom of the first planetary gear assembly is connected with the second sun gear (497), the second planetary gear assembly is meshed with the second sun gear (497) through a second planetary gear (496), and the output shaft (45) is connected with a bottom of the second planetary gear assembly.

9. The transmission mechanism according to claim 8, wherein
the first planetary gear assembly further comprises at least two sets of first planetary gears (491), and the at least two sets of the first planetary gears (491) are arranged and overlapped along an axial direction of the inner ring gear (492).

10. The transmission mechanism according to claim 9, wherein
each set of the first planetary gears (491) comprises a plurality of gears, the plurality of the gears are evenly distributed around the first sun gear (493) and meshed with the first sun gear (493), and the plurality of the gears are located on a same horizontal plane.

11. The transmission mechanism according to any one of preceding claims, wherein
the first sun gear (493) is fixedly connected with the motor output shaft of the driving motor (41) or the first sun gear (493) and the motor output shaft of the driving motor (41) are integrally formed.

12. An electric drill, comprising:
a supporting assembly (10), the supporting assembly (10) comprising a supporting plate (11) and a bracket (12), and the supporting plate (11) being mounted on the bracket (12);
a handle assembly (20), arranged on a handle (122) of the bracket (12);
a driving assembly (40), arranged on the supporting plate (11), the driving assembly (40) comprising a driving motor (41) and the transmission mechanism according to any one of preceding claims, the transmission mechanism being connected with a motor output shaft of the driving motor (41); and
a drill rod assembly (30), connected with an output shaft (45) in the transmission mechanism.

## Patentansprüche

1. Getriebemechanismus, umfassend:
ein erstes Sonnenrad (493), das auf einer Motorabtriebswelle eines Antriebsmotors (41) angeordnet ist,
eine erste Planetenradanordnung, umfassend einen ersten Planetenträger (494) und ein erstes Planetenrad (491), wobei das erste Planetenrad (491) auf einer Seite des ersten Planetenträgers (494) angeordnet ist und mit dem ersten Sonnenrad (493) in Eingriff ist, wobei ein Wellenloch an einem Zahnrad im ersten Planetenrad (491) angeordnet ist, wobei eine erste Getriebewelle (495) in dem Wellenloch montiert ist, wobei ein Ende der ersten Getriebewelle (495) mit dem ersten Planetenträger (494) verbunden ist und eine Abtriebswelle (45), die mit einer vom ersten Planetenträger (494) entfernten Seite des ersten Planetenrads (491) verbunden ist, **dadurch gekennzeichnet, dass** eine Innenwand des Wellenlochs mit einer spiralförmigen Nut (401) bereitgestellt ist, die zum Speichern von Schmiermittel konfiguriert ist.

2. Getriebemechanismus nach Anspruch 1, der weiter ein Innenhohlrad (492) umfasst, wobei
das erste Planetenrad (491) sich im Innenhohlrad (492) befindet und mit dem Innenhohlrad (492) in Eingriff ist.

3. Getriebemechanismus nach Anspruch 2, der weiter ein Getriebegehäuse (44) umfasst, wobei
die erste Planetenradanordnung und das Innenhohlrad (492) sich im Getriebegehäuse (44) befinden und das Innenhohlrad (492) mit einer Innenwand des Getriebegehäuses (44) verbunden ist.

4. Getriebemechanismus nach einem der vorstehenden Ansprüche, wobei
ein Ende der Abtriebswelle (45) fest mit einem Boden des ersten Planetenträgers (494) verbunden ist und das andere Ende der Abtriebswelle (45) mit einer Bohrstangenanordnung (30) verbunden ist.

5. Getriebemechanismus nach Anspruch 4, wobei
das mit dem ersten Planetenträger (494) verbundene Ende der Abtriebswelle (45) mit einer Senkbohrung (451) bereitgestellt ist und die Senkbohrung (451) und ein Mittelloch des ersten Planetenträgers (494) auf einer selben Achse liegen.

6. Getriebemechanismus nach Anspruch 5, wobei
in der Senkbohrung (451) ein Positionierstift (452) angeordnet ist und ein Ende des Positionierstifts (452) aus der Senkbohrung (451) herausragt und sich in das Mittelloch des ersten Planetenträgers (494) hinein erstreckt, um eine koaxiale Drehung des ersten Planetenträgers (494) und der Abtriebswelle sicherzustellen.

7. Getriebemechanismus nach Anspruch 2, der weiter ein zweites Sonnenrad und eine zweite Planetenradanordnung umfasst.

8. Getriebemechanismus nach Anspruch 7, wobei
das erste Sonnenrad (493) auf der Motorabtriebswelle angeordnet ist, die erste Planetenradanordnung mit dem ersten Sonnenrad (493) über ein erstes Planetenrad (491) in Eingriff ist, ein Boden der ersten Planetenradanordnung mit dem zweiten Sonnenrad (497) verbunden ist, die zweite Planetenradanordnung mit dem zweiten Sonnenrad (497) über ein zweites Planetenrad (496) in Eingriff ist und die Abtriebswelle (45) mit einer Boden der zweiten Planetenradanordnung verbunden ist.

9. Getriebemechanismus nach Anspruch 8, wobei
die erste Planetenradanordnung weiter mindestens zwei Sätze erster Planetenräder (491) umfasst und die mindestens zwei Sätze der ersten Planetenräder (491) entlang einer axialen Richtung des Innenhohlrads (492) angeordnet sind und überlappen.

10. Getriebemechanismus nach Anspruch 9, wobei
jeder Satz der ersten Planetenräder (491) eine Vielzahl von Zahnrädern umfasst, die Vielzahl der Zahnräder gleichmäßig um das erste Sonnenrad (493) verteilt sind und mit dem ersten Sonnenrad (493) in Eingriff stehen und die Vielzahl der Zahnräder sich auf derselben horizontalen Ebene befinden.

11. Getriebemechanismus nach einem der vorstehenden Ansprüche,
wobei
das erste Sonnenrad (493) fest mit der Motorabtriebswelle des Antriebsmotors (41) verbunden ist oder das erste Sonnenrad (493) und die Motorabtriebswelle des Antriebsmotors (41) einteilig ausgebildet sind.

12. Elektrischer Bohrer, das Folgendes umfasst:
eine Trägeranordnung (10), wobei die Trägeranordnung (10) eine Trägerplatte (11) und eine Halterung (12) umfasst und die Trägerplatte (11) auf der Halterung (12) montiert ist;
eine Griffanordnung (20), die an einem Griff (122) der Halterung (12) angeordnet ist;
eine Antriebsanordnung (40), die auf der Trägerplatte (11) angeordnet ist, wobei die Antriebsanordnung (40) einen Antriebsmotor (41) und den Getriebemechanismus nach einem der vorstehenden Ansprüche umfasst, wobei der Getriebemechanismus mit einer Motorabtriebswelle des Antriebsmotors (41) verbunden ist; und
eine Bohrstangenanordnung (30), die mit einer Abtriebswelle (45) im Getriebemechanismus verbunden ist.

## Revendications

1. Mécanisme de transmission, comprenant :
un premier planétaire (493), agencé sur un arbre de sortie de moteur d'un moteur d'entraînement (41),
un premier ensemble engrenage planétaire, comprenant un premier porte-satellites (494) et un premier engrenage planétaire (491), le premier engrenage planétaire (491) étant agencé sur un côté du premier porte-satellites (494) et s'engrenant avec le premier planétaire (493), un trou d'arbre étant agencé sur un engrenage dans le premier engrenage planétaire (491), un premier arbre d'engrenage (495) étant monté dans le trou d'arbre, une extrémité du premier arbre d'engrenage (495) étant reliée au premier porte-satellites (494), et un arbre de sortie (45), relié à un côté du premier engrenage planétaire (491) éloigné du premier porte-satellites (494), **caractérisé en ce qu'**une paroi interne du trou d'arbre étant dotée d'une rainure hélicoïdale (401) configurée pour stocker un lubrifiant.

2. Mécanisme de transmission selon la revendication 1, comprenant en outre une couronne dentée interne (492), dans lequel
le premier engrenage planétaire (491) est situé dans la couronne dentée interne (492) et s'engrène avec la couronne dentée interne (492).

3. Mécanisme de transmission selon la revendication 2, comprenant en outre une boîte de vitesses (44), dans lequel
le premier ensemble engrenage planétaire et la couronne dentée interne (492) sont situés dans la boîte de vitesses (44) et la couronne dentée interne (492) est reliée à une paroi interne de la boîte de vitesses (44).

4. Mécanisme de transmission selon l'une quelconque des revendications précédentes, dans lequel
une extrémité de l'arbre de sortie (45) est reliée à demeure à une partie inférieure du premier porte-satellites (494) et l'autre extrémité de l'arbre de sortie (45) est reliée à un ensemble tige de forage (30).

5. Mécanisme de transmission selon la revendication 4, dans lequel
l'extrémité de l'arbre de sortie (45) reliée au premier porte-satellites (494) est dotée d'un lamage (451) et le lamage (451) et un trou central du premier porte-satellites (494) sont sur un même axe.

6. Mécanisme de transmission selon la revendication 5, dans lequel
une broche de positionnement (452) est agencée dans le lamage (451) et une extrémité de la broche de positionnement (452) dépasse du lamage (451) et s'étend dans le trou central du premier porte-satellites (494) pour assurer une rotation coaxiale du premier porte-satellites (494) et de l'arbre de sortie.

7. Mécanisme de transmission selon la revendication 2, comprenant en outre un second planétaire et un second ensemble engrenage planétaire.

8. Mécanisme de transmission selon la revendication 7, dans lequel
le premier planétaire (493) est agencé sur l'arbre de sortie de moteur, le premier ensemble engrenage planétaire s'engrène avec le premier planétaire (493) par l'intermédiaire d'un premier engrenage planétaire (491), une partie inférieure du premier ensemble engrenage planétaire est relié au second planétaire (497), le second ensemble engrenage planétaire s'engrène avec le second planétaire (497) par l'intermédiaire d'un second engrenage planétaire (496) et l'arbre de sortie (45) est relié à une partie inférieure du second ensemble engrenage planétaire.

9. Mécanisme de transmission selon la revendication 8, dans lequel
le premier ensemble engrenage planétaire comprend en outre au moins deux jeux de premiers engrenages planétaires (491), et les au moins deux jeux de premiers engrenages planétaires (491) sont agencés et se chevauchent le long d'une direction axiale de la couronne dentée interne (492).

10. Mécanisme de transmission selon la revendication 9, dans lequel
chaque jeu de premiers engrenages planétaires (491) comprend une pluralité d'engrenages, la pluralité des engrenages sont répartis uniformément autour du premier planétaire (493) et s'engrènent avec le premier planétaire (493), et la pluralité des engrenages sont situés sur un même plan horizontal.

11. Mécanisme de transmission selon l'une quelconque des revendications précédentes,
dans lequel
le premier planétaire (493) est relié à demeure à l'arbre de sortie de moteur du moteur d'entraînement (41) ou le premier planétaire (493) et l'arbre de sortie de moteur du moteur d'entraînement (41) sont formés d'un seul tenant.

12. Tarière électrique comprenant :
un ensemble porteur (10), l'ensemble porteur (10) comprenant une plaque-support (11) et un support (12) et la plaque-support (11) étant montée sur le support (12) ;
un ensemble poignée (20), agencé sur une poignée (122) du support (12) ;
un ensemble d'entraînement (40), agencé sur la plaque-support (11), l'ensemble d'entraînement (40) comprenant un moteur d'entraînement (41) et le mécanisme de transmission selon l'une quelconque des revendications précédentes, le mécanisme de transmission étant relié à un arbre de sortie de moteur du moteur d'entraînement (41) ; et
un ensemble tige de forage (30), relié à un arbre de sortie (45) dans le mécanisme de transmission.
